# EUROPEAN PATENT APPLICATION

(11) **EP 3 199 503 A1**
(43) Date of publication of application: **02.08.2017**
(21) Application number: 16752210.1
(22) Date of filing: 25.01.2016
(51) Int. Cl.: C04B 35/80, C04B 35/565, C04B 35/573

(54) **METHOD FOR MANFACTURING CERAMIC-BASED COMPOSITE MATERIAL**

(30) Priority: 18.02.2015 JP 2015029241
(71) Applicant: IHI Corporation, Tokyo 135-8710 (JP)
(72) Inventor: SATO, Akihiro, Tokyo 135-8710 (JP); KANAZAWA, Shingo, Tokyo 135-8710 (JP); INOUE, Hisato, Tokyo 135-8710 (JP); NAKAMURA, Takeshi, Tokyo 135-8710 (JP)
(74) Representative: MERH-IP Matias Erny Reichl Hoffmann Patentanwälte PartG mbB
(86) International application number: PCT/JP2016/052024
(87) International publication number: WO 2016/132821

(57) **Abstract**

A production method for a ceramic matrix composite is comprised of: compounding an aggregate powder including a ceramic and a binder including one or more selected from the group of thermoplastic resins and waxes to form a composition of the aggregate powder and the binder; pressing the composition to form sheets; accumulating fabrics of reinforcement fibers including the ceramic and the sheets alternately; pressing an accumulated body of the fabrics and the sheets; and generating a matrix combining the reinforcement fibers together.

## Description

### TECHNICAL FIELD

The disclosure herein relates to a production method for a ceramic matrix composite applied to devices such as aircraft jet engines, which requires high-temperature strength.

### BACKGROUND ART

Ceramics have excellent heat resistance but at the same time many of them have a drawback of brittleness. Many attempts to combine inorganic fibers such as SiC with ceramics as matrices have been studied in order to overcome the brittleness.

As a process for combining, proposed are methods of chemical vapor infiltration (CVI), liquid phase infiltration (such as polymer infiltration pyrolysis (PIP)), solid phase infiltration (SPI), and molten metal infiltration (MI) for example. According to the PIP method for example, a fabric of fibers such as SiC is subject to infiltration of polymer solution and is sintered at elevated temperatures to form a ceramic, so that the ceramic is combined with the fibers and functions as a matrix. The polymer solution is properly selected in light of a ceramic to be formed. If a solution including polycarbosilane is selected, a matrix consisting of SiC is formed.

Arts in which some of these methods are combined have been proposed. The Patent Literature 1 discloses a related art.

### Citation List

### Patent Literature

PTL 1: Japanese Patent Application Laid-open No. 2008-081379

### SUMMARY

### TECHNICAL PROBLEM

Pores among the fibers, if remained, would be of course unfavorable to the ceramic matrix composite in light of its strength and toughness. Further, high-temperature air or water vapor intrusion through these pores would oxidize the ceramic matrix composite and thereby cause it to deteriorate. Any of the aforementioned methods could hardly produce a matrix that sufficiently fills the pores among the fibers, however. Therefore some measures such as repetition of infiltration are applied. As the repetition of infiltration further requires repetition of drying and sintering, the total process for producing a final product requires a month or more.

How much the pores are excluded from the ceramic matrix composites and how efficiently the pores are filled have been persistent technical problems in this art field.

### SOLUTION TO PROBLEM

According to an aspect, a production method for a ceramic matrix composite is comprised of: compounding an aggregate powder including a ceramic and a binder including one or more selected from the group of thermoplastic resins and waxes to form a composition of the aggregate powder and the binder; pressing the composition to form sheets; accumulating fabrics of reinforcement fibers including the ceramic and the sheets alternately; pressing an accumulated body of the fabrics and the sheets; and generating a matrix combining the reinforcement fibers together.

### ADVANTAGEOUS EFFECTS

The aggregate powder is efficiently infiltrated into the pores among the fibers, thereby efficiently filling the pores.

### BRIEF DESCRIPTION OF DRAWINGS

FIG. 1 is a flowchart in general explanation of a production method for a ceramic matrix composite according to an embodiment.
FIG. 2A is a drawing schematically illustrating a step of compounding in the production method.
FIG. 2B is a drawing schematically illustrating a step of forming a sheet in the production method.
FIG. 3A is a drawing of a schematic cross section of an accumulated body of reinforcement fibers and sheets including a ceramic in a state before being pressed.
FIG. 3B is a drawing of a schematic cross section of an accumulated body of reinforcement fibers and sheets including a ceramic in a state under pressing.
FIG. 4A is an illustrative perspective view of a molded body.
FIG. 4B is an illustrate perspective view of a final product.

### DESCRIPTION OF EMBODIMENTS

Exemplary embodiments will be described hereinafter with reference to the appended drawings.

Preferable applications of a ceramic matrix composite according to the embodiment include machine components exposed to high-temperature environments, as can be exemplified by components of an aircraft jet engine, and turbine blades, combustors or after-burners. It is of course applicable to the other applications.

The ceramic matrix composite according to the embodiment is generally comprised of fabrics of inorganic fibers such as silicon carbide (SiC) and a matrix of an inorganic substance such as SiC that combines the fabrics together. A production method for the ceramic matrix compound generally consists of impregnating a binder such as a thermoplastic resin with aggregate powder as a source for the matrix to form sheets thereof, accumulating the sheets and the fabrics alternately, and pressing them to infiltrate the aggregate into the fabrics. Further any one or more of molten metal infiltration (MI), chemical vapor infiltration (CVI), liquid phase infiltration (such as polymer infiltration pyrolysis (PIP)), and solid phase infiltration (SPI) are combined therewith to generate the matrix.

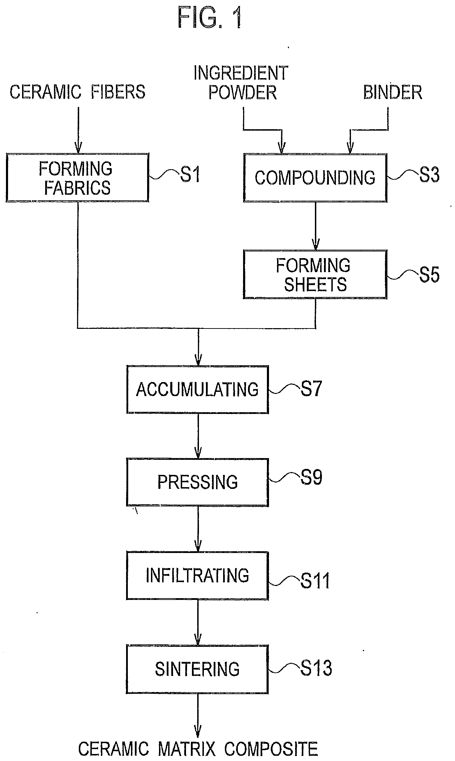

The production method for the ceramic matrix composite will be described below with reference mainly to FIG. 1. The description will be based on an example in which the MI method is combined but the production is not limited thereto.

To the ceramic matrix composite according to the embodiment applicable are ingredient fibers of SiC. Any commercially available fibers can be used therefor. Alternatively, fibers of any other inorganic substances may be included in or substituted for the fibers of SiC.

Any coating is applicable to the ingredient fibers in order to cover them with an interface coating. Carbon (C) and boron nitride (BN) can be cited as examples of the interface coating but the coating is not limited thereto. In light of oxidation resistance, BN is superior C. To a method for the coating, any publicly known methods such as the vapor deposition methods or the dip method are applicable. Further the coating may be formed either before or after a fabric formation step described later. The interface coating prevents propagation of crevices from the matrix to the fibers, thereby improving toughness. In the following description, the term "ingredient fibers" includes the meaning of the ingredient fibers covered with the interface coating.

The ingredient fibers are woven into fabrics 11 (fabrics formation step S1). The fabrics 11 may be formed by either two-dimensional weaving or three-dimensional weaving. The fabrics 11 may be, in addition, formed in a shape predetermined in accordance with its application. The plurality of fabrics 11 of the ingredient fibers is formed.

In parallel with formation of the fabrics 11, a composition 1 containing aggregate powder and binder are prepared.

Ceramics are applicable to the aggregate and one example thereof is SiC. The aggregate powder may contain powder of carbon (C) for the MI method described later. In the aggregate powder, the ratio of C to SiC is arbitrary, and further the aggregate powder may consist of only C or only SiC. While any limitation is applied to the particle size of the aggregate powder, powder with a smaller particle size readily infiltrates into minute pores in the fabrics but, on the other hand, powder with a greater particle size is more likely to prevent condensation of the powder. The particle size can be properly selected on the basis of this knowledge.

To the binder, any substance having plasticity at elevated temperatures and being decomposable to vanish at further elevated temperatures is applicable, and examples thereof are thermoplastic resins. The thermoplastic resins would typically melt, decompose and evaporate to dissipate at 200 degrees C or higher. Styrene series, acrylic series, cellulose series, polyethylene series, vinyl series, nylon series and fluorocarbon series resins can be cited as examples the thermoplastic resins.

The binder may contain any additives for various purposes, such as regulation of viscosity or fluidity or regulation of shape stability. Polyoxymethylene, polypropylene, fatty ester, fatty amide, phthalate ester, and waxes such as paraffin wax can be cited as examples of the additives. Only one of these additives may be added to the binder but instead two or more selected therefrom may be added thereto.

Alternatively, any commercially available binder for powder injection molding, which contains these substances with a properly regulated composition, is applicable. Such a binder for powder injection molding is generally available under the trade name of MRM-1 (product name by IHI Turbo Co.,Ltd.).

The mixing ratio of the binder to the aggregate powder could be properly regulated. While a greater mixing ratio of the binder has a greater advantage in stability of the shape of the composition 1, a smaller mixing ratio has a greater advantage in facility of infiltration of the aggregate powder into the fabrics 11. Thus the mixing ratio of the binder to the aggregate powder may be from 20 through 80 volume%, and may be more preferably from 30 through 60 volume%.

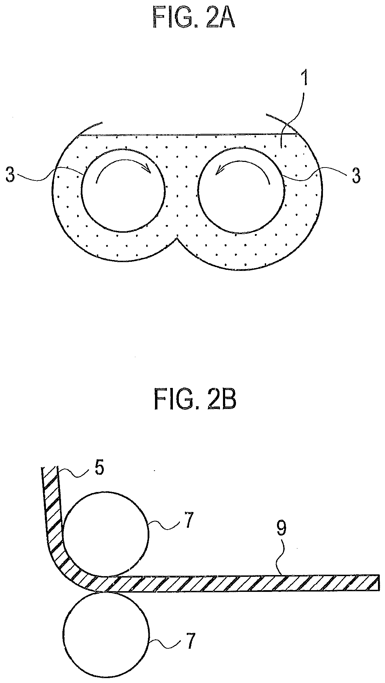

Referring to FIG. 2A in combination with FIG. 1, the composition 1 is heated up to from 100 through 150 degrees C in order to give it appropriate viscosity and is compounded (compounding step S3). For the purpose of compounding, a biaxial compounder comprising paired screw shafts 3 for example is applicable but not limiting. Preferably, the binder is first fed into the compounder that has been started in advance and, after confirming that its viscosity comes to be proper, the aggregate powder is little by little fed therein. It takes ten minutes or more for example to carry out compounding and masses of the powder, which are left not compounded with the binder, are removed if possible.

The compounded composition 1 is taken out, kept heated or re-heated up to from 100 through 150 degrees C, and pressed within a mold to form a plurality of short cylindrical pellets for example. Alternatively, it may be ejected from the compounder as a body in the form of a bar or a sheet and sequentially introduced into a subsequent sheet formation step. The pellets or the ejected bodies are preformed into a shape close to a sheet.

Referring to FIG. 2B in combination with FIG. 1, the ejected bodies or the preformed bodies 5 are squashed by means of a pair of rolls 7, which looks like a rolling mill. To prevent adhesion to the rolls, preferably the ejected bodies or the preformed bodies 5 are put in between release sheets and then introduced into the rolls. As being pressed down, the ejected bodies or the preformed bodies 5 are extended to form elongated and broadened sheets 9 (sheet formation step S5). A plurality of sheets 9, each of which includes the aggregate powder and the binder, is formed.

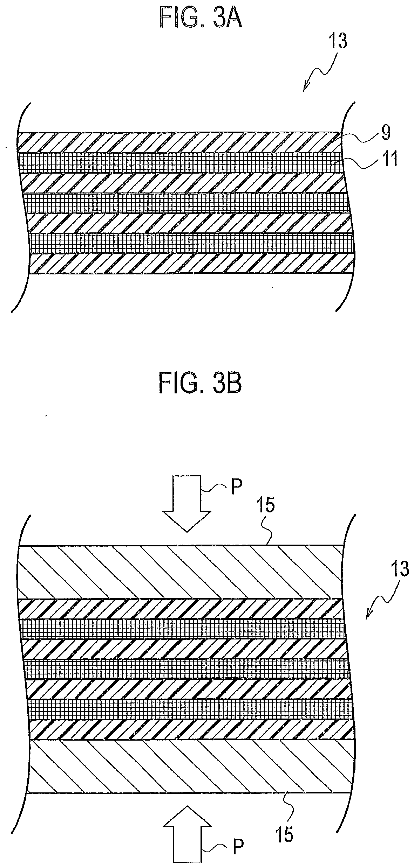

Referring to FIG. 3A in combination with FIG. 1, the fabrics 11 of the ingredient fibers and the sheets 9 each including the aggregate powder and the binder are accumulated alternately (accumulating step S7). The number of the fabrics 11 and the sheets 9 is, although not limiting, 2 pairs or more.

Referring to FIG. 3B in combination with FIG. 1, in a warm process from about 100 through 150 degrees C, the accumulated body 13 is pressed by means of a pair of rolls, which looks like a rolling mill (pressing step S9). Instead of pressing by the rolls, the accumulated body 13 may be sealed and pressed within a mold 15. Further, instead of applying uniaxial pressure P, multiaxial or isotropic pressure may be applicable. Still alternatively, vacuuming in a gas-tight mold may be used. In this step, the aggregate powder along with the binder infiltrates into pores among the fibers and acts as a source for the matrix.

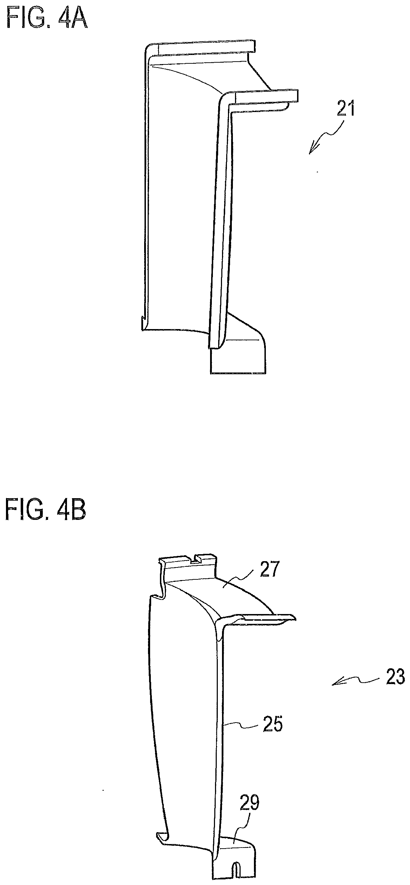

After or in parallel with the pressing step, the accumulated body 13 may be molded into a molded body 21 as shown in FIG. 4A. This molding can be carried out by steps of heating the accumulated body 13 up to from 100 through 150 degrees C, sealing it within a mold, and pressing them for example. After slow cooling so as to avoid thermal shock to the molded body 21, it is taken out from the mold. As the binder is then in the solid state, the binder keeps the shape formed by the molding and prevents the aggregate powder from falling off.

Subsequent to the pressing step or the molding step, a heat treatment may be executed in order to decompose the binder (degreasing step). In a case where infiltration of molten metal will be subsequently carried out, the infiltration and the degreasing may be executed simultaneously. In a case where the degreasing is carried out independently, the degreasing can be executed by heating the accumulated body 13 or the molded body 21 with heating means such as a carbon heater in a depressurized furnace or a furnace purged by any non-oxidative gas, for example. The heating temperature is any proper temperature (350 degrees C for example) at least equal to or higher than the decomposition temperature of the binder (250 degrees C for example), and such heating may last for several hours (from 4 through 8 hours for example). The heating causes the binder to decompose and dissipate, thereby leaving the ingredient fibers and the aggregate powder in the accumulated body 13 or the molded body 21.

Referring again to FIG. 1, subsequent to the pressing step or the molding step, infiltration of molten metal is carried out (infiltration step S11). An ingot of silicon (Si) or any Si alloy is adhered to the accumulated body 13 or the molded body 21 and heated to melt and infiltrate Si therein. Heating in this occasion could cause degreasing simultaneously if the degreasing step as mentioned above has not been executed.

The heating temperature is equal to or higher than a temperature at which Si in the ingot melts. While this temperature depends on the composition of the ingot, the melting point of pure Si for example is 1410 degrees C and alloying can lower the melting point. The heating temperature is preferably the melting point plus 20 degrees C or more. As overly high temperatures may deteriorate the reinforcement fibers or its coatings, the heating temperature is 1500 degrees C or lower for example. Typically the heating temperature is 1390 degrees C.

The MI method causes simultaneous progress of the infiltration and the sintering (sintering step S13). More specifically, Si, as being melted, infiltrates into the accumulated body 13 or the molded body 21 and then reacts with C in the aggregate powder to form SiC, which becomes integrated with SiC in the aggregate powder to form the matrix. The heating is held for a time sufficient to cause the melting and the reaction, and the time is 10 minutes or longer for example. As overly long times deteriorate the reinforcement fibers or its coatings, the heating time is 1 hour or shorter for example. Typically the heating temperature is 20 minutes.

As described earlier, any publicly known method such as the CVI method, the PIP method or the SPI method known may be used instead of the MI method. Or, any two or more methods of them could be executed repeatedly. In these methods, the infiltration step and the sintering step are independently but sequentially executable steps.

Obtained ceramic matrix composites are usually subjected to finishing and then final products are obtained as shown in FIG. 4B. After the finishing, coating may be additionally applied to them for the purpose of corrosion protection, improvement in thermal resistance, or prevention of adhesion of foreign substances.

As described already, the SPI method for example can successfully make aggregate powder infiltrate into pores but its efficiency is quite poor because the driving force for infiltration is insufficient. In accordance with the present embodiment, the binder receives pressure in the pressing step and this pressure acts on the aggregate powder as the binder mediates it, so that the pressure works as a driving force that causes the aggregate powder to infiltrate into the pores among the fibers. As the present embodiment allows use of the pressure as the driving force, the aggregate powder infiltrates into the pores among the fibers with high efficiency. As well as the rate of filling the pores is increased, it is possible to shorten the time required for the process.

In addition, as the present embodiment does not use any solvent, it is not necessary to waste time for drying it. The binder is soon solidified by cooling and in contrast readily removed by heating. When the MI method is used, removal of the binder can be executed as a parallel process in the heating step. As compared with the prior art in which considerable time is required for drying, this aspect further shortens the time required for the process.

The present embodiment has greater advantages in ease of machining, ease of formation, and strength of the product.

As the ingredient fibers have poor expandability, the fabric thereof, without the binder, is unlikely to be deformed. The fabric does not get deformed to follow the shape of dies and would therefore make wrinkles, or tends to locally get loose if forced to change in shape. Further, without any means for retaining its shape, the fabric readily makes spring-back deformation just after initial deformation, thereby failing to keep its shape. The present embodiment, however, prompts deformation that follows the dies because the ingredient fibers are forced to get deformed while bound by the viscous binder. The fabrics 11 are therefore prevented from making wrinkles and getting loose. The solidified binder contributes toward keeping its shape. Further, as described already, the aggregate powder is prevented from falling off during or after molding.

A ceramic matrix composite generally shows very high strength in directions where the reinforcement fibers run but shows far inferior strength in directions different therefrom or where the reinforcement fibers are not continuous because only the matrix bears the force. For example, in a case where a bulky member is produced and thereafter machined into a final product, the reinforcement fibers therein may be discontinuous at many portions thereof. In an example shown in FIG. 4B concerned with a stator vane of a gas turbine engine, in a case where it is machined out of a bulk, even where the reinforcement fibers are continuous throughout its airfoil section 25, the reinforcement fibers are unlikely to keep continuous through the outer band 27 and the inner band 29, which project to form substantially right angles from the airfoil section 25.

The molded body 21 is preformed by bending the fabrics into a shape close to the final product as shown in FIG. 4A, in which the fibers are continuous throughout the molded body. This molded body 21 is sintered and thereafter slightly machined to form the final product 23 as shown in FIG. 4B, and therefore continuity of the fibers is not lost. More specifically, in the final product 23, the reinforcement fibers run without discontinuity from the airfoil section 25 to the outer band 27, and as well from the airfoil section 25 to the inner band 29. It is apparent that its strength is assured in any portions thereof.

Further, as the shape after molding comes into a so-called near-net-shape close to the product shape, it saves the trouble about finishing.

Although certain embodiments have been described above, modifications and variations of the embodiments described above will occur to those skilled in the art, in light of the above teachings.

### INDUSTRIAL APPLICABILITY

A production method for a ceramic matrix composite is provided, which is capable of filling pores efficiently.

## Claims

1. A production method for a ceramic matrix composite, comprising:
compounding an aggregate powder including a ceramic and a binder including one or more selected from the group of thermoplastic resins and waxes to form a composition of the aggregate powder and the binder;
pressing the composition to form sheets;
accumulating fabrics of reinforcement fibers including the ceramic and the sheets alternately;
pressing an accumulated body of the fabrics and the sheets; and
generating a matrix combining the reinforcement fibers together.

2. The production method of claim 1, wherein the ceramic includes SiC.

3. The production method of claim 1 or 2, wherein the step of generating the matrix includes molten metal infiltration, gas phase infiltration, liquid phase infiltration, and solid phase infiltration.

4. The production method of claim 1 or 2, wherein the aggregate powder includes C powder and the step of generating the matrix includes adhering an ingot of Si or a Si alloy to the accumulated body and heating the ingot up to a temperature at which the ingot melts.

5. The production method of claim 1 or 2, further comprising:
at the same time of, or after, the step of pressing, carrying out near-net-shape molding with the accumulated body.

6. The production method of claim 1 or 2, further comprising:
coating the reinforcement fibers with C or BN.
